# EUROPEAN PATENT SPECIFICATION

(11) **EP 0 886 499 B1**
(45) Date of publication and mention of the grant of the patent: **16.10.2002**
(21) Application number: 97906273.4
(22) Date of filing: 06.03.1997
(51) Int. Cl.: A61C 9/00, B25G 3/10

(54) **DENTAL IMPRESSION TRAY ARRANGEMENT**
ZAHNTECHNISCHER ABFORMLÖFFELSATZ
CONCEPTION D'UN PLATEAU DE PRISE D'EMPREINTES DENTAIRES

(30) Priority: 07.03.1996 GB 9604806
(43) Date of publication of application: 30.12.1998
(73) Proprietor: Davis Healthcare Services Limited, Potters Bar, Herts EN6 3EE (GB)
(72) Inventor: MacGREGOR, Alistair, Roy, Glasgow G61 2SJ (GB); DAVIS, Daniel, Roger, Herts WD7 8HX (GB)
(74) Representative: Silverman, Warren
(86) International application number: GB9700631
(87) International publication number: WO97032537

(56) References cited:
- US-A- 3 473 225
- US-A- 3 736 663
- US-A- 4 408 375
- US-A- 4 825 515
- US-A- 5 076 785

## Description

This invention relates to trays for use when making dental impressions and more particularly to the provision of a handle construction for use with dental impression trays. US 5 076 785 discloses a dental compession tray which forms the basis for the preamble of Claim 1.

Latterly there have been in use two types of dental impression tray, in particular. On the one hand there is the all plastics product comprising a handle integral with the tray. This has the disadvantage of removing the choice whereby the dentist can dispense with use of a handle, as is preferred by some dentists, and causes storage difficulties in that nested storage becomes impossible. On the other hand dental impression trays generally formed of plastics material have been supplied ready for use without a handle leaving it optional for the dentist whether or not to use a handle. The handle is generally made of metal and engages removably a slot in the dental impression tray; it is commonly the practice to reuse such handles. However because they are made of metal, they are relatively expensive. Because of their relatively small size, they are prone to being lost.

A dentist needs to have available a variety of types of dental impression tray according to the gum magnitude and curvature and whether edentulous or dentate usage is envisaged. In principle the two usages require different shapes of handle. For dentate usage, the handle is usually flat. For edentulous patients, the tray may be shallower and/or may be higher or lower in the mouth and its introduction into the oral cavity using a flat, or single plane handle may result in the handle distorting the lip, thereby distorting the impression being taken.

It is an object of the present invention to provide a low cost dental impression tray arrangement of broad applicability.

According to the present invention, there is provided a dental impression tray of two-part form comprising a tray portion incorporating an arcuate channel and having a slot formed in the body thereof at a position bisecting the arc described by the channel of the tray, the slot being formed internally with latching apertures, and a handle having a handling portion and a head portion to enter the slot and become engaged therein, characterised in that the slot is within a box portion external of the arcuate channel and having lateral walls in which the latching opening are provided and the head portion is oversized in relation to the slot and compressible to enable it to enter the slot so that latching means on the handle can enter the latching openings, the lateral walls preventing lateral pressure being applied to the head portion of the the handle when the handle is thus engaged with the slot of the tray portion which would otherwise enable the head portion to be compressed and withdrawn from the slot.

Such a construction thus will meet the fundamental requirements of enabling use of the dental impression tray without a handle, if this should ever be desired, but more importantly of providing for easy stacking of the trays prior to use. In use, there will usually be permanent engagement of the handles in a composite product which can be disposed of after use. By forming the tray of the handle of low cost plastics materials, overall a low cost product is achievable. For example the tray may be made of acrylonitrile-butadiene-styrene (ABS) plastics while the handle may be made of polycarbonate with say 20% by weight glass fibre reinforcement. Such construction of the handle will give it the desired flexing characteristics without brittleness and therefore the handle will be able to bend if overstressed without breakage. The handling portion may moreover be strengthened by provision of longitudinal ribs thereon.

The overall nature of the arcuate channel will vary according to whether the tray is for dentate or edentulous use and according to the general dimensions of the relevant features in the patient's oral cavity. It will be relativity shallow, the channel will be U-shaped in transverse cross-section and the tray will not lie in a single plane where edentulous patients are concerned, because of the need for the channel to follow relatively faithfully the line of the gum. With dentate patients it will follow the line of the teeth and thus lie substantially but not necessarily completely, in one plane. The channel will be somewhat deeper. In the case of a tray to be used with the lower part of the mouth, it will have to be shaped to accommodate the tongue, generally by being open in the centre.

Because the slot has paired lateral wall surfaces formed with recesses therein usually opposite one another to assist entry of the head portion of the handle into the slot, the head portion is preferably tapered forwardly and has at least one longitudinally extending slot flanked by spaced apart prongs or limbs. Laterally extending projections on the lateral limb margins at the exterior of the handle are shaped for the projections to enter the recesses in the lateral wall surfaces and be retained therein.

The aforementioned problem of avoiding lip distortion when introducing a tray to the mouth of an edentulous patient may be readily solved if, instead of utilising a flat handle as is generally suitable for dentate patients, there is used a stepped handle which enables contact with the lip to be avoided as the tray is disposed in the oral cavity so that the tray is kept clear of lip contact.

Hitherto the practice when using reusable metal handles has been for the metal handle to be reversible but stepped to enable upper and lower jaw usage according to whether the patient is edentate or not. This means that a true handling portion cannot be present and full upper and lower jaw usage for both dentate and edentulous patients is not achieved particularly well.

For a better understanding of the invention, and to show how the same may be carried into effect, reference will now be made by way of example only to the accompanying drawings, in which:-
Figure 1 is an exploded perspective view of a first perforated dental impression tray for the upper jaw of a dentate patient;
Figure 2 is an exploded perspective view of a second perforated dental impression tray for the lower jaw an edentulous patient;
Figure 3 is an underside plan view of a third perforated dental tray which is for the lower jaw of a dentate patient;
Figure 4 is a transverse cross-section through the tray of Fig. 3;
Figure 5 is a plan view of the handle of Fig. 1;
Figure 6 is a plan view of the handle of Fig. 2; and
Figure 7 is a plan view of an alternative detail of the handles of Figures 5 and 6.

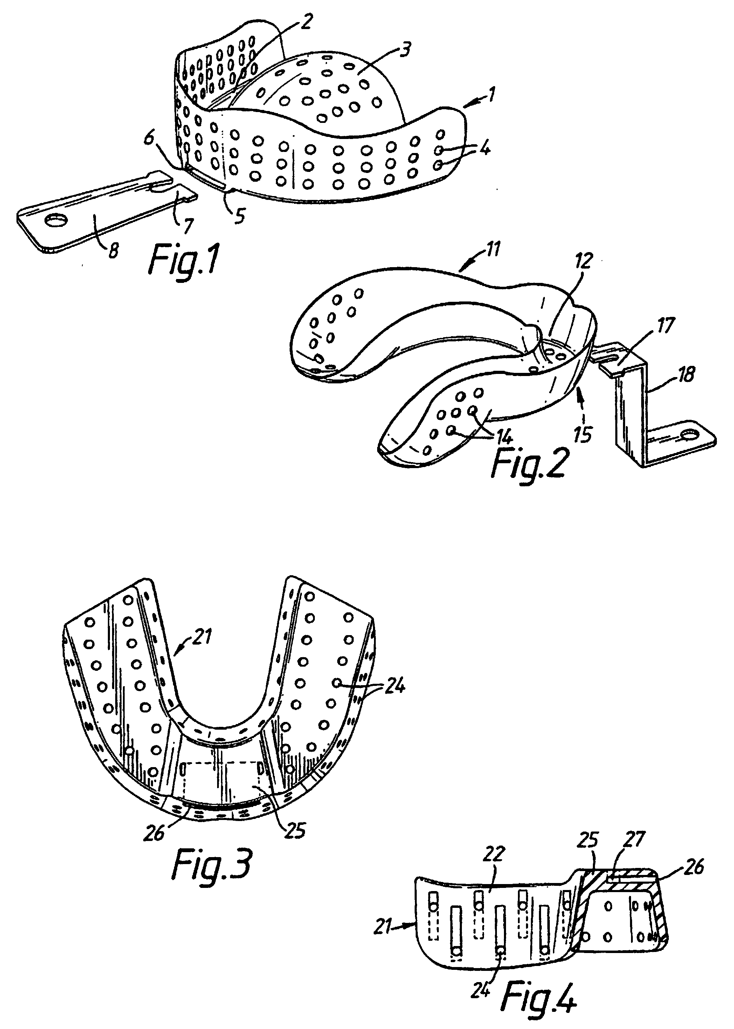

Fig. 1 shows a characteristic form of dental impression tray 1 for dentate upper jaw use. The tray defines an arcuate channel 2 having a flat base and in which existing teeth will be positioned and a domed plate portion 3 for resting against the palate. An impression material is initially placed in the channel 2 and a plurality of holes 4 located over all wall surfaces of the tray enable surplus impression material to be outwardly displaced as the impression is taken. In a box portion 5 at the base of the tray is a slot 6 sized for entry by the pronged end 7 of a flat handle 8 whose overall design is appropriate to the use of the tray 1 with dentate patients.

Fig. 2 shows in its inverted state, a relatively shallow form of tray 11 for use against the gums of the lower jaw of edentulous patients. The tray 11 has a generally arcuate body defining a channel 12 of U-shaped transverse cross-section. The interior of the arc is open to accommodate the tongue and the channel widens and rises at its ends. Apertures 14 exist for escape of impression material. A handle 18 of stepped or dog-legged form terminates in a pronged end 17 for entering a slot (not visible) in a box portion 15 disposed at what will be, in use, the top of the tray 11.

Figs. 3 and 4 relate to a deep form of tray 21 for use against the teeth of the lower jaw of dentate patients. The tray 21 has a generally arcuate body defining a channel 22 of substantially rectangular cross-section. The interior of the arc is open to accommodate the tongue and the base of the channel is curved outwardly to a small extent at the end of the channel to match the line of the gum. Apertures 24 exist for escape of impression material. A box portion 25 is disposed on what will be, in use, the top of the tray. Extending through the box portion 25 is a slot 26 which, at its part remote from the mouth thereof, is formed with recesses 27 at lateral portions thereof. Box portions 5, 15 and 25 of Figures 1, 2 and 3 respectively may, in fact, have like shape and be utilised with like handle head portions.

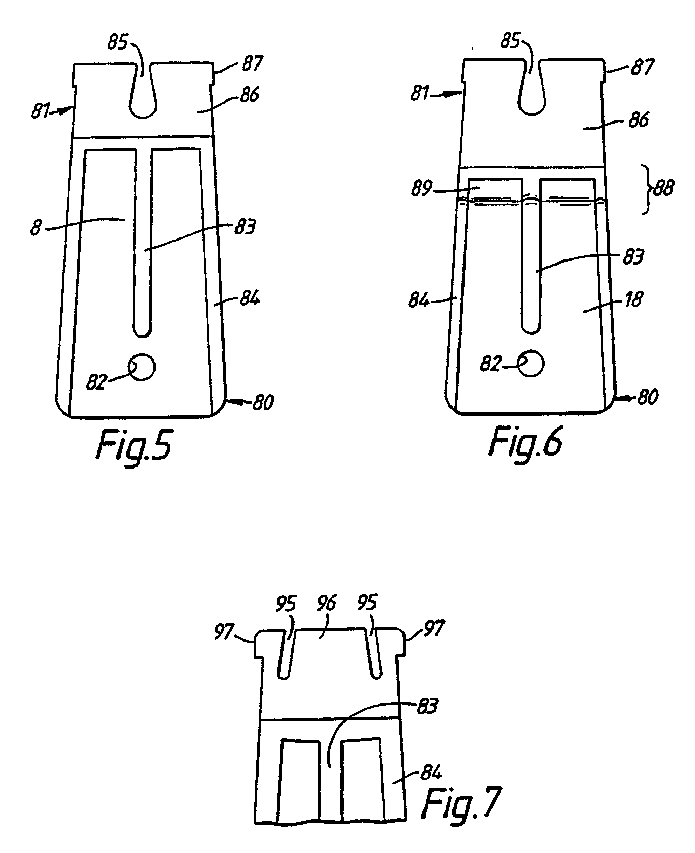

Fig. 5 shows on an enlarged scale the handle 8 of Fig. 1. The handle can be seen to be of tapered form narrowing forwardly from its handling end 80 to its head portion 81. At its handling end 80, it is provided with a through-opening 82 for hanging the mould for drying of the impression. The generally flat body of the handle 8 is formed with a central longitudinally extending rib 83 and a pair of flanking ribs 84 as reinforcements. At its head, and narrowest part, the handle bifurcates with provision of a keyhole-shaped slot 85 separating a pair of wings or limbs 86 provided at their forwardmost part with a widened portion 87.

Handle 18 of Fig. 2 is shown to an enlarged scale in Fig. 6, and is of like form to the handle 8 of Fig. 1 but for the provision of a stepped section 88 providing an inclined wall surface 89 over which the ribs 83 and 84 extend. Although Fig. 2 shows 90° bends in the handle, the angles of the bends may be increased, in practice, to about 120°, preferably 105°, for reasons of dimensional stability maintenance during usage in the preferred embodiment of Fig. 4. The stepped arrangement is desirable for the edentulous form of dental impression tray of Fig. 2.

The principle of engagement of the handles 8 and 18 with their respective dental impression trays 1, 11 and 21 of Figs. 1, 2 and 3 and 4 is essentially the same and will be described with respect to the tray 21 of Figs. 3 and 4.

The insertion into the slot 26 of the head portion of the chosen handle is such that use is made of the slot 85 in the head portion to force together between finger and thumb the limbs 86 and thereby reduce the width of the head portion of the handle to enable it to enter the slot 26. Once this slot has been entered, it is possible for the handle to be pushed further through the slot until the recesses 27 become available to the widened portions 87 which spring thereinto and are latched therein as a result of release of the compression exerted on the wings 87 under the elasticity of the material of the handle.

Once the handle is engaged in this manner it cannot be removed. A dental impression is taken in the usual manner with the benefit that if the handle is stepped as in Fig. 6 and used with a dental impression tray of the edentulous type (Fig. 2), the step will enable the tray and its handle to be kept clear of the lip as it is being introduced into the oral cavity. After a dental impression has been taken and the impression material has hardened, advantage is taken of the rigid nature of the tray itself to separate it from the moulding which is then ready for use in producing an appropriate dental prosthesis.

Finally, Fig. 7 shows a variant of the head portion of the handles shown in Figs. 5 and 6. Here the head portion is formed with a pair of sloes 95 which are inclined towards each other and separated by a web 96. The slots are flanked on the outside by narrow winged portions 97 whose wings function like the wings 87 of Figs. 5 and 6, springing into recesses 27 (in Fig. 6) to lock the handle onto the dental impression tray. The provision of the two slots and narrow winged portioning requires relatively little compressive force for the wings 97 to be forced towards the web 96 and then be latched in the recesses 27 as with the constructions of Figs. 5 and 6.

Various modifications of the illustrated arrangements which embody this invention may be conceived. Apart from variations in the inclination of the dog-leg part of the handle for edentulous patients already mentioned, it is also possible for different arrangements of reinforcing ribs on the handles to be contemplated.

## Claims

1. A dental impression tray (1; 11; 21) of two-part form comprising a tray portion incorporating an arcuate channel (2; 12; 22) and having a slot (6; 16; 26) formed in the body thereof at a position bisecting the arc described by the channel of the tray, the slot being formed internally with latching apertures (27), and a handle (8; 18; 28) having a handling portion (80) and a head portion (81) to enter the slot and become engaged therein, **characterised in that** the slot (6; 16; 26) is within a box portion (5) external of the arcuate channel and having lateral walls in which the latching opening (27) are provided and the head portion (81) is oversized in relation to the slot (6; 16; 26) and compressible to enable it to enter the slot so that latching means (87; 97) on the head portion (81) can enter the latching openings (27), the lateral walls preventing lateral pressure being applied to the head portion (81) of the the handle when the said head portion (81) is thus engaged with the slot of the tray portion which would otherwise enable the head portion (81) to be compressed and withdrawn from the slot.

2. A dental impression tray (1) as claimed in claim 1 for dentate upper jaw use and comprising additionally a domed base (3) for resting against the palate, the handle (8) being substantially flat overall.

3. A dental impression tray (11) as claimed in claim 1 for use against the gum of the lower jaw of an edentulous patient, the tray having a generally arcuate body defining a channel (12) of U-shaped transverse cross-section, the handle (18) being of stepped form and comprising head portion (81), handling portion (80) and an intermediate portion (88) set at an angle to the head portion and handling portions sufficient to enable contact with the lower lip to be avoided as the tray is introduced into the oral cavity.

4. A dental impression tray (21) as claimed in claim 1 for lower jaw dentate patient use, the tray having a generally arcuate body defining a channel (22) of substantially rectangular cross-section, the handle (28) being substantially flat overall.

5. A dental impression tray (11) as claimed in claim 3, wherein said angle is in the range of from 90 to 120°, preferably 105°.

6. A dental impression tray (1; 11; 21) as claimed in any preceding claim, wherein the tray portion is formed of ABS plastics and the handle (8; 18; 28) is made of polycarbonate having a glass fibre reinforcement.

7. A dental impression tray as claimed in any preceding claim, wherein the handling portion (80) of the handle is formed with reinforcing ribs (83, 84) running lengthwise thereof.

8. A dental impression tray as claimed in any preceding claim, wherein the head portion of the handle (8; 18; 28) is formed with at least one slot (85; 95) extending from the head portion end of the handle towards the interior thereof and allowing forcing towards each other of parts of the head portion flanking the slot(s).

9. A dental impression tray as claimed in claim 8, comprising a pair of slots (95) positioned adjacent the lateral margins of the head portion.

## Patentansprüche

1. Zweiteiliger zahntechnischer Abformlöffel (1; 11; 21), aufweisend einen Löffelabschnitt, der einen bogenförmigen Kanal (2; 12; 22) beinhaltet und einen Schlitz (6; 16; 26) aufweist, welcher im Körper des selben an einer Position ausgebildet ist, die den vom Kanal des Löffels beschriebenen Bogen halbiert, wobei der Schlitz innenseitig mit Einrastöffnungen (27) ausgebildet ist, und einen Handgriff (8; 18; 28), der einen Handhabungsabschnitt (80) und einen Kopfabschnitt (81) zum Einfahren in den Schlitz und zum Eingriff in den selben aufweist, **dadurch gekennzeichnet, dass** sich der Schlitz (6; 16; 26) innerhalb eines Fachabschnitts (5) außerhalb des bogenförmigen Kanals befindet und Seitenwände aufweist, in denen die Einrastöffnungen (27) vorhanden sind, und dass der Kopfabschnitt (81) im Verhältnis zum Schlitz (6; 16; 26) überdimensioniert ist und komprimierbar ist, um es zu ermöglichen, dass er in den Schlitz einfährt, sodass Einrastmittel (87; 97) auf dem Kopfabschnitt (81) in die Einrastöffnungen (27) einfahren können, wobei die Seitenwände verhindern, dass ein seitlicher Druck auf dem Kopfabschnitt (81) des Handgriffs ausgeübt wird, wenn der Kopfabschnitt (81) auf diese Weise mit dem Schlitz des Löffelabschnitts in Eingriff gebracht wird, was andernfalls ermöglichen würde, dass der Kopfabschnitt (81) komprimiert und aus dem Schlitz herausgezogen wird.

2. Zahntechnischer Abformlöffel (1) nach Anspruch 1 zur Verwendung für die Zähne des Oberkiefers, welcher zusätzlich eine gewölbte Grundplatte (3) zum Anliegen gegen den Gaumen aufweist, wobei der Handgriff (8) in seiner Gesamtheit im Wesentlichen flach ist.

3. Zahntechnischer Abformlöffel (11) nach Anspruch 1 zur Verwendung am Zahnfleisch des Unterkiefers eines zahnlosen Patienten, wobei der Löffel einen allgemein bogenförmigen Körper aufweist, der einen Kanal (12) von U-förmigem transversalen Querschnitt begrenzt, wobei der Handgriff (18) stufenförmig ausgebildet ist und einen Kopfabschnitt (81), einen Handhabungsabschnitt (80) und einen Zwischenabschnitt (88) aufweist, welcher mit dem Kopfabschnitt und dem Handhabungsabschnitt einen Winkel einschließt, der ausreichend groß ist, um zu ermöglichen, dass ein Kontakt mit der Unterlippe vermieden wird, wenn der Löffel in die Mundhöhle eingeführt wird.

4. Zahntechnischer Abformlöffel (21) nach Anspruch 1 zur Verwendung bei den Zähnen des Unterkiefers eines Patienten, wobei der Löffel einen allgemein bogenförmigen Körper aufweist, der einen Kanal (22) von im Wesentlichen rechteckigem Querschnitt begrenzt, wobei der Handgriff (28) in seiner Gesamtheit im Wesentlichen flach ist.

5. Zahntechnischer Abformlöffel (11) nach Anspruch 3, wobei der Winkel im Bereich von 90° bis 120°, vorzugsweise bei 105°, liegt.

6. Zahntechnischer Abformlöffel (1; 11; 21) nach einem der vorstehenden Ansprüche, wobei der Löffelabschnitt aus ABS-Kunststoff ausgebildet ist und der Handgriff (8; 18; 28) aus glasfaserverstärktem Polycarbonat hergestellt ist.

7. Zahntechnischer Abformlöffel nach einem der vorstehenden Ansprüche, wobei der Handhabungsdsabschnitt (80) des Handgriffs mit Verstärkungsrippen (83, 84) ausgebildet ist, welche in Längsrichtung des selben verlaufen.

8. Zahntechnischer Abformlöffel nach einem der vorstehenden Ansprüche, wobei der Kopfabschnitt des Handgriffs (8; 18; 28) mit mindestens einem Schlitz (85; 95) ausgebildet ist, der sich vom Kopfabschnittsende des Handgriffs gegen das Innere des selben erstreckt und das Drücken von Teilen des Kopfabschnitts, welche den Schlitz/die Schlitze flankieren, gegeneinander ermöglicht.

9. Zahntechnischer Abformlöffel nach Anspruch 8, aufweisend ein paar Schlitze (95), die benachbart der seitlichen Ränder des Kopfabschnitts angeordnet sind.

## Revendications

1. Porte-empreinte dentaire (1 ; 11 ; 21) à deux composants avec une partie porte-empreinte comportant un canal arqué (2 ; 12 ; 22) et présentant une fente (6 ; 16 ; 26) ménagée dans le corps de ladite partie porte-empreinte en une position bissectant l'arc décrit par le canal du porte-empreinte, la fente étant formée intérieurement avec des ouvertures d'enclipsage (27), et avec une poignée (8 ; 18 ; 28) ayant une partie de préhension (80) et une partie tête (81) apte à pénétrer dans la fente et s'engager dans celle-ci, **caractérisé en ce que** la fente (6 ; 16 ; 26) est ménagée dans une partie de type logement (5) extérieure au canal arqué et dotée de parois latérales présentant l'ouverture d'enclipsage (27), **en ce que** la partie tête (81) est surdimensionnée par rapport à la fente (6 ; 16 ; 26) et compressible pour permettre l'insertion de celle-ci dans la fente de façon que les moyens d'enclipsage (87 ; 97) que présente la partie tête (81) puissent s'engager dans les ouvertures d'enclipsage (27), les parois latérales empêchant l'application d'une pression latérale sur la partie tête (81) de la poignée lorsque ladite partie tête (81) est ainsi engagée dans la fente de la partie porte-empreinte, pression latérale qui autoriserait sinon la compression de la partie tête (81) et son extraction hors de la fente

2. Porte-empreinte dentaire (1) selon la revendication 1 pour mâchoire supérieure dentée, comprenant en outre une base bombée (3) destinée à venir en appui contre le palais, la poignée (8) étant sensiblement plane dans son ensemble.

3. Porte-empreinte dentaire (11) selon la revendication 1, destiné à être appliqué contre la gencive de la mâchoire inférieure d'un patient édenté, le porte-empreinte ayant un corps de forme générale arquée définissant un canal (12) de section transversale en U, la poignée (18) étant de forme étagée et comprenant une partie tête (81), une partie de préhension (80) et une partie intermédiaire (88) formant avec la partie tête et la partie de préhension un angle suffisant pour permettre d'éviter tout contact avec la lèvre inférieure lors de l'insertion du porte-empreinte dans la cavité buccale.

4. Porte-empreinte dentaire (21) selon la revendication 1, destiné à être utilisé sur la mâchoire inférieure dentée d'un patient, le porte-empreinte ayant un corps de forme générale arquée définissant un canal (22) de section transversale sensiblement rectangulaire, la poignée (28) étant sensiblement plane dans son ensemble.

5. Porte-empreinte dentaire (11) selon la revendication 3, **caractérisé en ce que** ledit angle est compris entre 90 et 120° et est de préférence égal à 105°.

6. Porte-empreinte dentaire (1 ; 11 ; 21) selon l'une quelconque des revendications précédentes, **caractérisé en ce que** la partie porte-empreinte est réalisée en plastique ABS et la poignée (8 ; 18 ; 28) en polycarbonate renforcé de fibres de verre.

7. Porte-empreinte dentaire selon l'une quelconque des revendications précédentes, **caractérisé en ce que** la partie de préhension (80) de la poignée est formée avec des nervures de renfort (83, 84) longitudinales.

8. Porte-empreinte dentaire selon l'une quelconque des revendications précédentes, **caractérisé en ce que** la partie tête de la poignée (8 ; 18 ; 28) est formée avec au moins une fente (85 ; 95) qui s'étend de l'extrémité de la partie tête de la poignée vers l'intérieur de celle-ci, permettant de rapprocher l'une de l'autre les portions de la partie tête adjacentes à ladite ou auxdites fentes.

9. Porte-empreinte dentaire selon la revendication 8, comprenant une paire de fentes (95) ménagées à proximité des bords latéraux de la partie tête.
